# EUROPÄISCHE PATENTANMELDUNG

(11) **EP 4 389 413 A1**
(43) Veröffentlichungstag der Anmeldung: **26.06.2024**
(21) Anmeldenummer: 23212517.9
(22) Anmeldetag: 28.11.2023
(51) Int. Cl.: B32B 5/18, B60R 13/02

(54) **MEHRSCHICHTIGE VERBUNDSTRUKTUR**

(30) Priorität: 19.12.2022 DE 102022213896
(71) Anmelder: Benecke-Kaliko AG, 30419 Hannover (DE)
(72) Erfinder: Nassauer, Benjamin, 30165 Hannover (DE)
(74) Vertreter: Continental Corporation

(57) **Zusammenfassung**

Die Erfindung betrifft eine mehrschichtige Verbundstruktur (1) mit einer einlagigen oder mehrlagigen Oberschicht (2), aufweisend eine sichtbare Vorderseite (3) und eine Rückseite (4), wobei auf der Rückseite (4) mindestens eine erste elektrisch leitfähige Schicht (6) mit einer gedruckten elektrisch leitfähigen Struktur angeordnet ist, und einer einlagigen oder mehrlagigen Unterschicht (5). Die wenigstens erste elektrisch leitfähige Schicht (6) bildet einen Sensor oder einen Teil eines Sensors.

## Beschreibung

Die Erfindung betrifft eine mehrschichtige Verbundstruktur mit einer einlagigen oder mehrlagigen Oberschicht, aufweisend eine sichtbare Vorderseite und eine Rückseite, wobei auf der Rückseite mindestens eine erste elektrisch leitfähige Schicht mit einer gedruckten elektrisch leitfähigen Struktur angeordnet ist, und einer einlagigen oder mehrlagigen Unterschicht. Die Erfindung betrifft außerdem ein Verkleidungselement für einen Fahrzeuginnenraum.

Im Automobilbau werden weiche Innenraumoberflächen durch mehrschichtige Aufbauten erzielt. Diese Aufbauten umfassen häufig eine Schaumschicht und eine Oberschicht. Auf diese Weise können Bauteile wie Türverkleidungen, Instrumententafeln oder Armauflagen dargestellt werden. Um solche Oberflächen zu beheizen, kommen häufig Heizdrähte zum Einsatz. Um optische und haptische Abzeichnungen der Drähte an der Oberfläche auszuschließen, befinden sich diese Drähte üblicher Weise unter einer Schaumschicht. Aufgrund der Tatsache, dass zwischen derartigen Heizdrähten und der Oberschicht des mehrschichtigen Verbundmaterials eine Distanz von üblicherweise mehr als 10 mm besteht, wird die gewünschte Erwärmung nur zeitverzögert erreicht.

Ein weiterer Nachteil besteht darin, dass die Drähte üblicherweise mit verhältnismäßig großem Abstand verlegt werden, wodurch warme und kalte Regionen an der Oberfläche des mehrschichtigen Verbundmaterials entstehen können, was außerordentlich unerwünscht ist.

Aus der EP 1 924 125 B1 ist es bekannt, eine Polymerschicht auf Basis von Polyurethan oder PVC durch Zugabe von leitfähigen Additiven, zum Beispiel Nanotubes, Silber, ionischen Flüssigkeiten, Graphitpartikeln und/oder Kupferpartikeln in das pastenförmige Kunststoffmaterial vor Ausbildung der Schicht elektrisch leitfähig auszurüsten, um diese nach Ausbildung der Schicht mittels Stromdurchfluss unmittelbar elektrisch zu beheizen. Allerdings müssen in einem solchen Fall entsprechend hohe Füllgrade der leitfähigen Additive realisiert werden, um ausreichende Leitfähigkeit zur Erzeugung der erwünschten Erwärmung zu erreichen. Ein hoher Füllgrad beeinflusst jedoch die Flexibilität negativ, sodass einer Anwendung im Sitzbereich Grenzen gesetzt sind. Derartige Schichten erweisen sich zudem als schwer kontaktierbar. Lötfahnen, welche lokal aufgeklebt werden, erzeugen lokale Hotspots, die in ungünstigen Fällen zu einem Brand führen können. Dies liegt maßgeblich daran, dass nur die der Lötfahne unmittelbar benachbarte Schicht kontaktiert wird, der Kontakt jedoch durch den Anpressdruck der Lötfahne und des Klebers begrenzt ist und somit eine unregelmäßige elektrische Leitfähigkeit vorliegt.

Zur Lösung dieses Problems offenbart die DE 10 2020 215 949 A1 ein Verfahren zur Herstellung einer elektrisch heizbaren Schicht aus einem pastenförmigen Kunststoffmaterial, wobei in das Kunststoffmaterial ferner ein Kontaktierungsadditiv hineindispergiert wird, wodurch sich die elektrisch heizbare Schicht einfacher und zuverlässiger elektrisch kontaktierbar ist. Das pastenförmige Kunststoffmaterial kann in einem Druckverfahren auf das Trägermaterial appliziert werden, wodurch zum Beispiel Strukturen in Form von Leiterbahnen zur Stromzufuhr der elektrisch heizbaren Schicht gebildet werden können.

Durch eine zunehmende Digitalisierung von Fahrzeugen und einer damit in Verbindung stehenden Erhebung von Sensordaten werden in modernen Fahrzeuganwendungen zunehmend Sensoren in den Oberflächen eines Fahrzeuginnenraums verbaut. Für eine hochauflösende Messung müssen die Sensoren nahe der Oberfläche integriert werden. Jedoch beeinflusst die oberflächennahe Anordnung starrer Sensorelemente den haptischen Eindruck auf nachteilige Weise, weshalb die Sensoren häufig unter einer geschäumten Schicht zur Abpolsterung angeordnet sind, was wiederum die Messgenauigkeit negativ beeinflusst.

Der Erfindung liegt die Aufgabe zugrunde, eine mehrschichtige Verbundstruktur bereitzustellen, welche wenigstens einen Sensor zur Erfassung von physikalischen

Größen bereitstellt. Zusätzlich soll eine hohe Messgenauigkeit des Sensors gewährleistet werden. Zusätzlich oder alternativ soll die Oberflächenhaptik der Verbundstruktur durch das Sensorelement nicht nachteilig beeinflusst werden.

Die Lösung dieser Aufgabe ergibt sich durch eine mehrschichtige Verbundstruktur mit den Merkmalen des unabhängigen Anspruchs 1.

Weitere vorteilhafte Ausbildungen sind in den abhängigen Ansprüchen offenbart. Eine weitere Lösung der Aufgabe ergibt sich durch ein Verkleidungselement für einen Fahrzeuginnenraum aus der erfindungsgemäßen mehrschichtigen Verbundstruktur gemäß Anspruch 6.

Weitere Vorteile und Merkmale sind der allgemeinen Beschreibung sowie den Ausführungsbeispielen zu entnehmen.

Die vorliegende Anmeldung betrifft eine mehrschichtige Verbundstruktur mit einer einlagigen oder mehrlagigen Oberschicht, aufweisend eine sichtbare Vorderseite und eine Rückseite, wobei auf der Rückseite mindestens eine erste elektrisch leitfähige Schicht mit einer gedruckten elektrisch leitfähigen Struktur angeordnet ist, und einer einlagigen oder mehrlagigen Unterschicht. Die wenigstens erste elektrisch leitfähige Schicht bildet einen Sensor oder einen Teil eines Sensors.

Mit anderen Worten kann die elektrisch leitfähige Struktur direkt auf die Rückseite der Oberschicht, welche aus einem polymeren Material, beispielsweise einem thermoplastischem Polyolefin oder aus einem Polyurethan ausgebildet sein kann, gedruckt werden. Hierzu kann ein pastöses Material mit elektrisch leitfähigen Additiven, zum Beispiel aus Kohlenstoff oder Silber, versetzt werden. Es zeigt sich als vorteilhaft, dass die elektrisch leitfähige Schicht auf diese Weise besonders dünn und flexibel ausgebildet sein kann. Ein Anordnen von Sensoren kann so unmittelbar unter der Oberschicht erfolgen, ohne dass der optische und haptische Eindruck der sichtbaren Vorderseite der Oberschicht durch starre und lokal angeordnete Elektronikkomponenten negativ beeinflusst wird. Die Messgenauigkeit und bzw. oder die Messwertauflösung kann durch ein oberflächennahes Anordnen des Sensors unmittelbar auf der Rückseite der Oberschicht verbessert werden.

Die elektrische leitfähige Schicht kann zur Stromversorgung an eine Spannungsquelle und bzw. oder zum Abgreifen von Sensorsignalen an eine Auswerteelektronik angeschlossen werden. Es zeigt sich als besonders vorteilhaft, dass durch Drucken der elektrisch leitfähigen Struktur die hierfür erforderlichen Leiterbahnen bereits innerhalb der mehrschichtigen Verbundstruktur vorgesehen sein können. Hierdurch kann der Aufwand einer externen Verkabelung der elektrisch leitfähigen Schicht verringert bzw. komplett vermieden werden. Die Leiterbahnen sind stellenweise frei zugänglich und nicht durch die Unterschicht bedeckt, wodurch die Kontaktstellen mit externen Einrichtungen z. B. mit Steck- oder Crimpverbindungen elektrisch leitend verbunden werden können. Die Kontaktierungsposition kann durch entsprechendes Layout der gedruckten Leiterbahnen frei gewählt werden. Besonders vorteilhaft ist es hierbei die Oberschicht um die Bauteilkante herum auf die Rückseite der Unterschicht zu führen und die Steck- oder Crimpverbinder dort im nicht sichtbaren Bereich anbringen zu können. Neben der ersten elektrisch leitfähigen Schicht können weitere elektrisch leitfähige Schichten unterhalb der Oberschicht angeordnet sein.

Gemäß einem weiteren Aspekt der vorliegenden Erfindung ist die mindestens erste elektrisch leitfähige Schicht elektrisch heizbar. Auf vorteilhafte Weise kann ein oberflächennahes Anordnen der elektrisch heizbaren Schicht unmittelbar auf der Rückseite der Oberschicht zu einer schnelleren und bzw. oder energieeffizienteren und bzw. oder gleichmäßigeren Erwärmung der Oberschicht führen. Hier wirkt sich auch die flächige Ausgestaltung der Heizschicht im Vergleich zu einem Draht positiv aus. Durch die gleichzeitige Kombination der elektrisch leitfähigen Schicht als Sensor- und Heizelement kann die Anzahl der Komponenten, welche ausschließlich die Funktion des Sensors oder eines Heizelements erfüllen würden, reduziert werden. Durch die Integration mehrerer Funktionen in die elektrisch leitfähige Schicht kann ein besonders kompakter und bzw. oder kostengünstiger Aufbau der mehrschichtigen Verbundstruktur erfolgen.

Gemäß einem weiteren Aspekt der vorliegenden Erfindung weist die Verbundstruktur einen kapazitiven Drucksensor mit der ersten elektrisch leitfähigen Schicht und einem Dielektrikum und einer zweiten elektrisch leitfähigen Schicht auf. Durch das Vorhandensein der ersten elektrisch leitfähigen Schicht und der zweiten elektrisch leitfähigen Schicht kann auf vorteilhafte Weise zusätzlich die Heizleistung im Vergleich zu der alleinig vorhandenen ersten elektrisch leitfähigen Schicht gesteigert werden. Dies bedeutet, dass die erste elektrisch leitfähige Schicht sowohl eine Heizschicht als auch eine erste Elektrode des kapazitiven Drucksensors bilden kann. Die zweite elektrisch leitfähige Schicht kann ebenso eine Heizschicht als auch eine zweite Elektrode des kapazitiven Drucksensors bilden.

Werden Oberflächen im Fahrzeug als Strahlungsheizer eingesetzt, können dort Temperaturen von über 60°C erreicht werden. Das beschriebene System aus Heizung und kapazitivem Drucksensor kann eingesetzt werden, um Berührungen der Oberfläche zu erkennen und daraufhin die Heizleistung zu stoppen oder zu reduzieren, um Verbrennungen der Fahrzeuginsassen zu vermeiden.

Eine weitere vorteilhafte Ausbildung der vorliegenden Erfindung sieht vor, dass die Unterschicht aus einem Polymerschaum gebildet ist. Der Polymerschaum kann aus Polyvinylchlorid-, Polyolefin- oder Polyurethanschaum ausgebildet sein. Der Polymerschaum kann zur Herstellung eines Haftverbunds mit einer der elektrisch leitfähigen Schichten gegebenenfalls eine Haftvermittlungsschicht aufweisen. Der Polymerschaum der Unterschicht kann zum Beispiel auf die mindestens erste elektrisch leitfähige Schicht aufkaschiert werden. Jedwede physikalisch-chemischen Eigenschaften der mehrschichtigen Verbundstruktur lassen sich für den jeweiligen Anwendungszweck so in breiter Weise einstellen.

Gemäß einem weiteren Aspekt der vorliegenden Erfindung ist die erfindungsgemäße mehrschichtige Verbundstruktur in einem Thermoformprozess verarbeitbar. Besonders vorteilhaft ist die Kombination einer Oberschicht aus Polyolefinen mit leitfähigen Schichten aus dehnbaren leitfähigen Pasten mit einem Polyolefinschaum als Unterschicht. Ein solcher Aufbau kann mit einem Thermoformprozess auf einen Bauteilträger kaschiert werden und bildet eine weiche, funktionale und dekorative Oberfläche.

Die Anmeldung betrifft außerdem ein Verkleidungselement für einen Fahrzeuginnenraum, gebildet aus einer erfindungsgemäßen mehrschichtigen Verbundstruktur. So kann die mehrschichtige Verbundstruktur ein beliebiges Verkleidungselement mit einer dekorativen Oberfläche sein, welches durch die zusätzliche Sensorfunktion und bzw. oder die elektrische Heizbarkeit einen funktionellen Mehrwert bietet, ohne dass die optische und haptische Anmutung negativ beeinflusst wird. Die mehrschichtige Verbundstruktur kann als Verkleidungselement für Armaturenträger, Armlehnen oder Türverkleidungen verwendet werden.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand des Anspruchs 1 und bzw. oder dem unabhängigen Anspruch 6 kombinierbar ist.

Anhand der Zeichnung wird im Folgenden ein Ausführungsbeispiel der Erfindung schematisch dargestellt und näher erläutert.

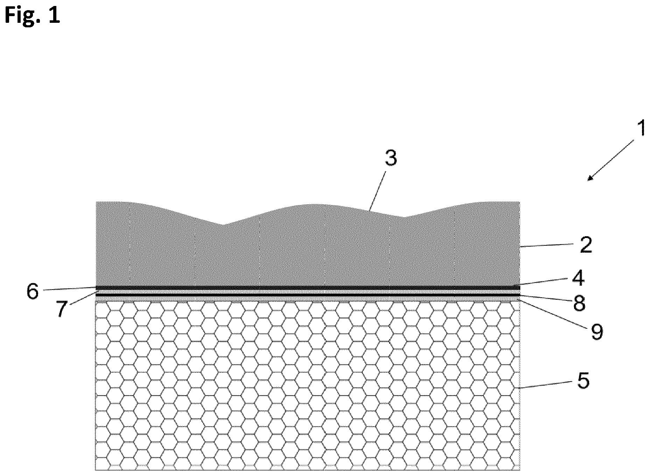

Darin zeigt Fig. 1 eine schematische Darstellung einer erfindungsgemäßen mehrschichtigen Verbundstruktur gemäß eines ersten Ausführungsbeispiels in einer Schnittdarstellung.

Die Fig. 1 zeigt eine mehrschichtige Verbundstruktur 1 mit einer Oberschicht 2, einer ersten elektrisch leitfähigen Schicht 6, einem Dielektrikum 7, einer zweiten elektrisch leitfähigen Schicht 8 und einer Unterschicht 5. Die Oberschicht 2 weist eine sichtbare Vorderseite 3 auf. Die sichtbare Vorderseite 3 weist eine reliefartige Oberflächenstruktur in Form einer Narbung auf, wie es typischer Weise bei einer Oberflächenfolie der Fall ist. Die erste elektrisch leitfähige Schicht 6, das Dielektrikum 7 und die zweite elektrisch leitfähige Schicht 8 bilden einen kapazitiven Drucksensor. Die erste elektrisch leitfähige Schicht 6 und die zweite elektrisch leitfähige Schicht 8 sind durch ihren inneren Widerstand bei Stromfluss beheizbar, sodass die mehrschichtige Verbundstruktur 1 zusätzlich als Flächenheizelement, z. B. zum Beheizen von Oberflächen im automobilen Innenraum, verwendbar ist. Die erste elektrisch leitfähige Schicht 6 ist in einem Druckverfahren als pastöse Masse auf eine Rückseite 4 der Oberschicht 2 gedruckt. Auf die erste elektrisch leitfähige Schicht 6 ist das Dielektrikum 7 aufgebracht. Das Dielektrikum 7 wird durch eine polymere, elektrisch nichtleitende Schicht gebildet. Auf die zweite elektrisch leitfähige Schicht 8 ist die Unterschicht 5 aus Polymerschaum mit Hilfe einer zusätzlichen Haftvermittlerschicht 9 aufkaschiert.

### Bezugszeichenliste (Teil der Beschreibung)

- 1: Mehrschichtige Verbundstruktur
- 2: Oberschicht
- 3: Sichtbare Vorderseite
- 4: Rückseite
- 5: Unterschicht
- 6: Erste elektrisch leitfähige Schicht
- 7: Dielektrikum
- 8: Zweite elektrisch leitfähige Schicht
- 9: Haftvermittler

## Patentansprüche

1. Mehrschichtige Verbundstruktur (1) mit
einer einlagigen oder mehrlagigen Oberschicht (2), aufweisend eine sichtbare Vorderseite (3) und eine Rückseite (4),
wobei auf der Rückseite (4) mindestens eine erste elektrisch leitfähige Schicht (6) mit einer gedruckten elektrisch leitfähigen Struktur angeordnet ist, und einer einlagigen oder mehrlagigen Unterschicht (5),
**dadurch gekennzeichnet, dass**
die wenigstens erste elektrisch leitfähige Schicht (6) einen Sensor oder einen Teil eines Sensors bildet.

2. Mehrschichtige Verbundstruktur (1) nach Anspruch 1,
**dadurch gekennzeichnet, dass**
die mindestens erste elektrisch leitfähige Schicht (6) elektrisch heizbar ist.

3. Mehrschichtige Verbundstruktur (1) nach einem der vorhergehenden Ansprüche,
**dadurch gekennzeichnet, dass**
die Verbundstruktur (1) einen kapazitiven Drucksensor mit der ersten elektrisch leitfähigen Schicht (6) und einem Dielektrikum und einer zweiten elektrisch leitfähigen Schicht aufweist.

4. Mehrschichtige Verbundstruktur (1) nach einem der vorhergehenden Ansprüche,
**dadurch gekennzeichnet, dass**
die Unterschicht (5) aus einem Polymerschaum gebildet ist.

5. Mehrschichtige Verbundstruktur (1) nach einem der vorhergehenden Ansprüche, **dadurch gekennzeichnet, dass** die mehrschichtige Verbundstruktur (1) in einem Thermoformprozess verarbeitbar ist.

6. Verkleidungselement für einen Fahrzeuginnenraum, gebildet aus einer mehrschichtigen Verbundstruktur (1) nach einem der vorhergehenden Ansprüche.
